# EUROPÄISCHE PATENTSCHRIFT

(11) **EP 0 492 076 B1**
(45) Veröffentlichungstag und Bekanntmachung des Hinweises auf die Patenterteilung: **30.08.1995**
(21) Anmeldenummer: 91117903.4
(22) Anmeldetag: 21.10.1991
(51) Int. Cl.: B60N 2/24

(54) **Doppel-Fahrgastsitz**
Double passenger seat
Siège double de passager

(30) Priorität: 24.12.1990 DE 9017470 U
(43) Veröffentlichungstag der Anmeldung: 01.07.1992
(73) Patentinhaber: Ignaz Vogel GmbH & Co KG, Fahrzeugsitze, D-76228 Karlsruhe (DE)
(72) Erfinder: Vogel,Ignaz, W-7500 Karlsruhe 41-Stu (DE)
(74) Vertreter: Trappenberg, Hans

(56) Entgegenhaltungen:
- EP-A- 0 263 189
- EP-A- 0 283 571
- EP-A- 0 330 594
- DE-A- 2 607 192
- DE-U- 8 631 383
- DE-U- 9 017 470

## Beschreibung

Die Erfindung betrifft einen Doppel-Fahrgastsitz, gebildet aus zwei nebeneinander angeordneten sitzen mit Rückenlehne, die auf einem Untergestell angeordnet sind, das gebildet ist aus beidseitigen Auflagen, die von einem vorderen und einem hinteren, als Hohlkammer-Kastenprofil ausgebildeten Tragprofil, oder einer Tragprofilschiene mit einem vorderen und einem hinteren Tragprofil überspannt sind, wobei die Tragprofile jeweils mindestens eine oberseitige im Querschnitt T-förmige Verbindungsnut aufweisen und bei dem einer der Sitze über Längslager quer zur Sitzrichtung verschiebbar angebracht ist, wobei die Längslager jeweils in der T-förmigen Verbindungsnut angeordnet sind.

Derartige Doppel-Fahrgastsitze werden insbesondere in Omnibussen eingebaut, wobei sich der fest eingebaute Sitz an der Außenwand und der verschiebbare Sitz sich an der Gangseite befindet. Das Verschieben des gangseitigen Sitzes dient dazu, nachdem sämtliche Fahrgäste Platz genommen haben, den Abstand zwischen dem feststehenden Sitz und der darauf sitzenden Person zur Komforterhöhung auf Kosten der Begehbarkeit des zwischen den Sitzen angeordneten Ganges zu verbreitern. Zum Ein- und Aussteigen allerdings müssen die Sitze wieder zusammengeschoben werden, um das Begehen des Ganges zwischen den Sitzen nicht zu behindern.

Diese Verschiebbarkeit der Fahrgastsitze ist mit verhältnismäßig hohen Kosten verbunden und wird daher nur bei einer Komfortbestuhlung angewandt. Die Komfortbestuhlung allerdings ist nur mit, relativ zur Einfachbestuhlung, hohem Gewicht zu erreichen, da eine derartige Bestuhlung nicht nur eine bessere und damit schwerere Polsterung vorsieht, sondern beispielsweise auch eine verschwenkbare Rückenlehne, wie auch Fußstützen und sonstige Komforteinrichtungen, die allesamt das Gewicht eines solchen Fahrgastsitzes in die Höhe treiben. Dieses Gewicht muß nun im Falle einer abrupten Verzögerung, beispielsweise bei einem Unfall, von dem Sitz selbst wie auch von dessen Tragkonstruktion aufgenommen werden. Zu bedenken ist auch, daß bei einer solchen abrupten Verzögerung, insbesondere also bei einem Unfall, der Raum zwischen den Rückenlehnen der hintereinander angeordneten Fahrgastsitze den Überlebensraum des Fahrgastes darstellen. Ziel muß es daher sein, die durch eine abrupte Verzögerung nach vorne auf die Rückseite des Fahrgastsitzes geschleuderten Fahrgäste unter Energieverzehrung so aufzufangen, daß Verletzungen weitgehend vermieden werden. Diese Aufgabe übernimmt insbesondere die Rückenlehne, wobei allerdings Voraussetzung ist, daß das Untergestell so stabil ist, daß es den Sitz in einem solchen Falle halten und die Rückenlehne damit ihre Energie absorbierende Arbeit übernehmen kann. Dies bedeutet jedoch auch, daß das zum Verschieben des quer verschiebbaren Sitzes notwendige Längslager in der Lage sein muß, die bei einem Unfall quer zu seiner Längserstreckung einwirkenden hohen Kräfte aufzunehmen.

Bei den bisherigen Ausführungen derartiger Doppel-Fahrgastsitze wurden entweder die Tragprofile so abgekröpft, daß sich die Oberseite der auf den abgekröpften Teil aufgesetzten Längslager in einer Ebene mit dem jenseitigen Teil des Tragprofils befand, so daß auch die darauf montierten Sitze die gleiche Höhenlage hatten oder daß, bei geradlinig verlaufenden Tragprofilen, unter die feststehenden Sitze Distanzstücke entsprechend der Höhendifferenz zu dem aufgebauten Längslager untergesetzt wurden. Beide Maßnahmen führen allerdings zu einer Höhenminderung des Fußraumes für die dahinter sitzenden Fahrgäste und damit zu einer Komforteinbuße.

Es wurde oben schon dargelegt, daß die zur Querverschiebung des Fahrgastsitzes notwendigen Längslager bei einem Unfall sehr hohe, quer auf sie einwirkende Kräfte aufzunehmen haben. Da die auf den Auflagern ruhenden Tragprofile als Festpunkt anzusehen sind, müssen die auf diese Tragprofile aufgesetzten Längslager für das mit der Aufbauhöhe potentiell wachsende Kippmoment ausgebildet werden. Dies bedingt eine stabile und damit teure Ausführung der Längslager, die zudem noch recht schwer sind, also das Totgewicht derartiger Fahrgastsitze erhöhen. Hinzu kommt, daß derartige Längslager auch klappersicher sein müssen, also weder im belasteten noch im unbelasteten Zustand ein Klappern der Fahrgastsitze zulassen dürfen. Um all diesen Bedingungen zu genügen, wurden stets diese Längslager in einer äußerst stabilen, schweren und teuren Ausführung eingesetzt.

Aus der EP-A- 0 263 189 ist ein Doppel-Fahrgastsitz bekannt, bei dem das Sitzuntergestell aus Profilstäben aufgebaut ist, die einen flachliegenden Rechteck-Kastenholm bilden. Mit den Profilstäben sind zwei im Querschnitt C-förmige Verbindungsschienen verbunden. Eine Montageplatte, auf der das Sitz-Untergestell angebracht ist, ist mittels Nutenschrauben, welche in die Verbindungsschienen verschiebbar eingefügt sind, auf der Oberseite der Profilstäbe angebracht. Hierdurch läßt sich der Sitz bei der Montage auf einfache Weise an die vorgesehene Stelle schieben und befestigen. Nachdem der Sitz befestigt ist, ist ein Verschieben des Sitzes jedoch nicht mehr möglich.

Aus der Druckschrift DE-U-8 631 383 ist ein Doppel-Fahrgastsitz bekannt, bei dem ein Sitz fest und der andere Sitz verschiebbar angeordnet ist. Der Fahrgastsitz ist auf einem Traggestell angeordnet, welches als aus Blech hergestellte Montageplatte ausgebildet ist. Auf der Montageplatte ist eine Verschiebeschiene angeordnet, in welcher der verschiebbare Sitz gleitet. Die Verschiebeschienen beziehungsweise ihre oberen verschiebbaren Teile sind mit zueindergerichteten Laschen ausgestattet, die mit einem zum Beispiel aus Rohr bestehenden Unterrahmen des eigentlichen Sitzes in fester Verbindung stehen. Die Laschen sind hoch am Rahmen angesetzt.

Ausgehend vom vorstehend genannten Stand der Technik ist es Aufgabe der Erfindung, einen eingangs genannten Doppel-Fahrgastsitz derart auszubilden, daß der verschiebbare Sitz auf einfache Weise arretiert beziehungsweise die Arretierung auf einfache Weise gelöst werden kann und auf den Einsatz von schwergewichtigen und teuren Längslagern verzichtet werden kann.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Nicht mehr also wie bei den bisherigen Ausführungen werden die Längslager auf die Tragprofile aufgebaut, mit dem dadurch bedingten hohen Kippmoment und damit der schwergewichtigen Ausführung der Längslager, sondern sie werden direkt in die Tragprofile, also in den Festpunkt hineinverlegt, so daß in Sitzrichtung wirkende Kräfte nur noch zu einem geringen Teil von diesen Längslagern aufgenommen werden müssen, die sich nunmehr direkt an dem als Hohlkammer-Kastenprofil ausgebildeten und daher sehr stabilen Tragprofil abstützen können. Damit können diese Längslager sehr leicht aufgebaut sein, da sie ja nunmehr fast ausschließlich nur noch Führungsaufgabe haben, während die Kräfte vom umgebenden Tragprofil aufgenommen werden. Mit dieser Anordnung ist außerdem noch der außerordentlich kostenmindernde Vorteil verbunden, daß das Abkröpfen der Tragprofile oder das Aufsetzen von Distanzstücken entfällt. Weiterhin wird als entscheidender Vorteil für derartige Komfortbestuhlungen der nunmehr um die Höhe dieses Längslagers erhöhte Fußraum angesehen. Insgesamt ergeben sich damit nicht nur konstruktive Vorteile, sondern auch der Vorteil der Gewichtseinsparung und der Kostenminderung.

Voraussetzung für die erfindungsgemäße Anordnung ist allerdings, daß die Längslager auch in die T-förmige Verbindungsnut der Tragprofile eingefügt werden können. Dies bedingt selbstverständlich eine sehr flachliegende Bauweise, die jedoch durchaus akzeptiert werden kann, da ja, wie bereits oben erwähnt, nur noch sehr geringe Querkräfte auf das Längslager einwirken. So können die Längslager als Gleitlager oder Wälzlager aufgebaut sein, wobei die Basis dieser Lager direkt die Begrenzungswände der T-förmigen Verbindungsnut oder eine in die T-förmige Verbindungsnut eingefügte Lagerplatte sein kann. Um ein Klappern des Längslagers zu vermeiden, wird zwischen die Begrenzungswände und diese Lagerplatte eine geringfügig federnde Zwischenlage eingefügt, wobei diese Zwischenlage eine quergekrümmte Blattfeder aus Stahl oder Kunststoff oder auch ein Kunststoff-Elastomer sein kann. Weiter können auch vorzugsweise mit einem Schmiermittel, beispielsweise mit Molybdändisulfid gefüllte, ballig federnd nachgiebige Gleitscheiben wie auch sonstige, die Reibung, insbesondere die Haftreibung, vermindernde Materialien Verwendung finden.

Die Elastomere beziehungsweise federnden Zwischenlagen verhindern hierbei beim unbelasteten Sitz ein Klappern der Längslager, da durch diese federnden Einfügungen die Längslager an die Begrenzungswände der T-förmigen Verbindungsnut gepreßt werden.

Insgesamt ergibt sich durch die erfindungsgemäße Ausführung derartiger Doppel-Fahrgastsitze eine Minderung des Totgewichtes, eine vereinfachte Montage, sowohl bei quer- wie auch hochgestellten oder schrägverlaufenden Verbindungsnuten, eine klappersichere Führung des verschiebbaren Sitzes sowie eine preiswerte Herstellung.

Auf der Zeichnung sind Ausführungseispiele des Erfindungsgegenstandes schematisch dargestellt, und zwar zeigen:
- Fig. 1: die Seitenansicht eines Fahrgastsitzes,
- Fig. 2: ein Tragprofil mit einem eingefügten Längslager unbelastet,
- Fig. 3: wie Fig. 2 belastet,
- Fig. 4: ein eingefügtes Wälzlager mit Blattfeder,
- Fig. 5: wie Fig. 4, jedoch mit nachgiebiger Kunststoffeinlage,
- Fig. 6: eine weitere, leicht abgewandelte Ausführung der Erfindung
- Fig. 7: die gleiche Ausführung wie Fig. 6, jedoch mit hochkant gestelltem Tragprofil,
- Fig. 8: wie Fig. 7, jedoch mit schräggestelltem Tragprofil
und
- Fig. 9: ein Tragprofil mit einseitig angeordneten Hohlkammer-Kastenprofilen.

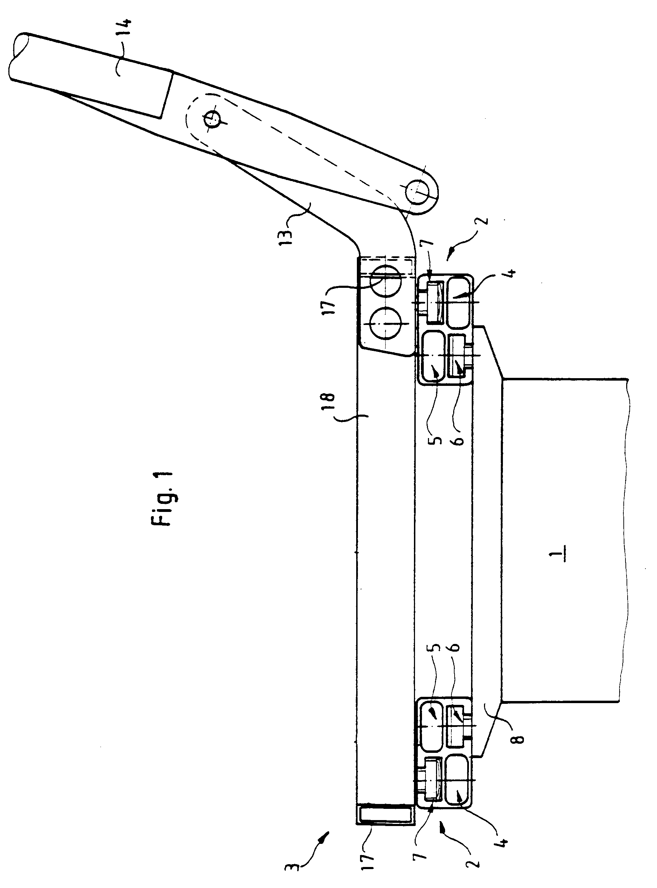

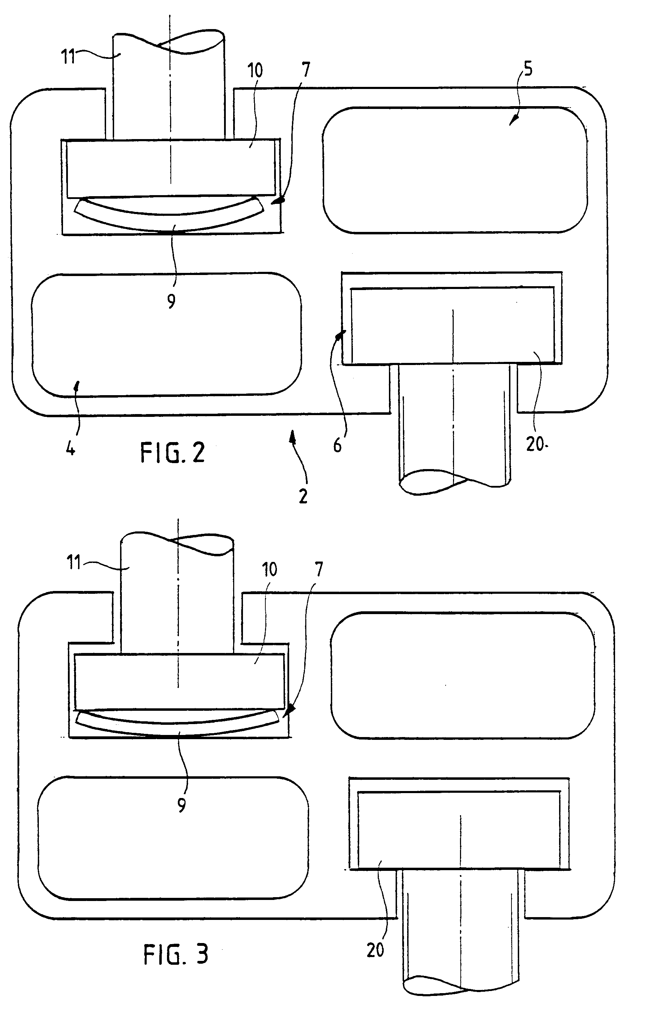

Aus Fig. 1 sind Auflagen (1, 8) ersichtlich, auf die Tragprofile (2) aufgebaut sind. Die Tragprofile (2) bestehen aus flachliegenden Kastenholmen mit zwei Teil-Kastenholmen (4, 5) und einer unterseitigen (6) sowie einer oberseitigen T-förmigen Verbindungsnut (7). In die unterseitige T-förmige Verbindungsnut (6) sind Hammerkopfschrauben eingeführt, mit denen diese Tragprofile (2) auf der Unterlage (8) der Auflage (1, 8) angeschraubt sind. In die oberseitigen T-förmigen Verbindungsnuten (7) können ebenfalls gleiche Hammerkopfschrauben zur festen Befestigung der aus Rechteckrohren (17, 18) gebildeten Sitzplatte (3) eingefügt sein oder auch Längslager entsprechend den Fig. 2 bis 7, an die dann jeweils wieder die Sitzplatte (3) angebracht wird. An der Sitzplatte (3) sind Streben (13) zum Anlenken einer Rückenlehne (14) angebracht.

Eine erste Ausführung des in ein Tragprofil (2) eingefügten Längslagers ist in Fig. 2 dargestellt. Hierbei sind leicht nach innen gebogene, vorzugsweise aus mit Schmierstoff gefüllte Kunststoff-Gleitstücke (9) in die T-förmige Verbindungsnut (7) eingelegt. Auf diese Gleitstücke (9) drückt eine Aufnahmeschiene (10), die über Bolzen (11) mit der Sitzplatte (3) verbunden ist. Fig. 2 zeigt den Sitz in unbelastetem Zustand, in dem die gebogenen, federnd nachgiebigen Gleitstücke (9) die Aufnahmeschiene (10) an die obere Begrenzung der T-förmigen Verbindungsnut (7) anpressen. Dadurch ist mit Sicherheit ein Klappern dieses Längslagers beziehungsweise auch des Sitzes vermieden. Fig. 3 zeigt in gleicher Ausführung den belasteten Sitz. Hierbei ist das Gleitstück (9) zusammengepreßt, so daß sich die Oberseite der Aufnahmeschiene (10) von der oberen Begrenzung der T-förmigen Verbindungsnut (7) gelöst hat. In diesem Zustand ist ohne Schwierigkeiten eine Verschiebung des über die Bolzen (11) mit der Aufnahmeschiene (10) verbundenen Sitzes möglich.

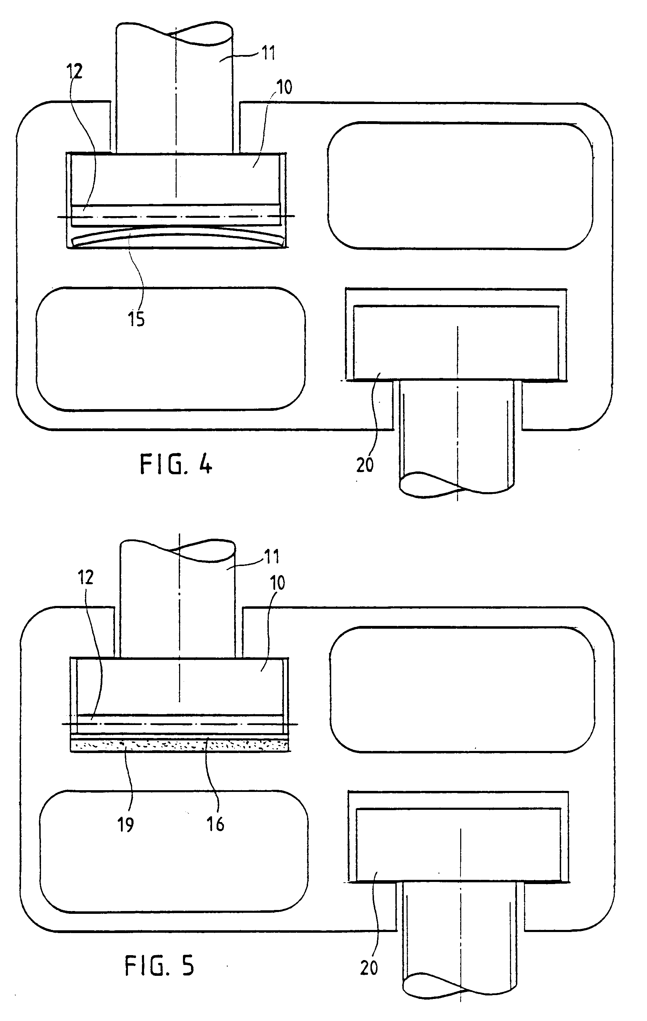

Fig. 4 zeigt in gleicher Darstellungsweise wie die Fig. 2 und 3 ein durch die Aufnahmeschiene (10) belastetes Nadellager (12), das andererseits auf einer Blattfeder (15) aufliegt. Auch hier wirkt sich wiederum die Auflage des Nadellagers (12) auf der Blattfeder (15) so aus, daß sich die Oberseite der Aufnahmeschiene (10) an die obere Begrenzung der T-förmigen Verbindungsnut (7) anlegt und damit ein Klappern verhindert wird. Bei belastetem Sitz wird die Blattfeder (15) zusammengedrückt, so daß ein Verschieben des Sitzes möglich ist. Fig. 5 zeigt in gleicher Darstellungsweise eine Lagerplatte (16) über einem Elastomer (19), wiederum mit dem gleichen Effekt, daß bei unbelastetem Sitz die Oberseite der Aufnahmeschiene (10) gegen die obere Wandung der T-förmigen Verbindungsnut (7) gepreßt und damit ein Klappern des Sitzes vermieden wird, während bei belastetem Sitz das Elastomer (19) zusammengepreßt wird, so daß ein Verschieben des Sitzes möglich ist.

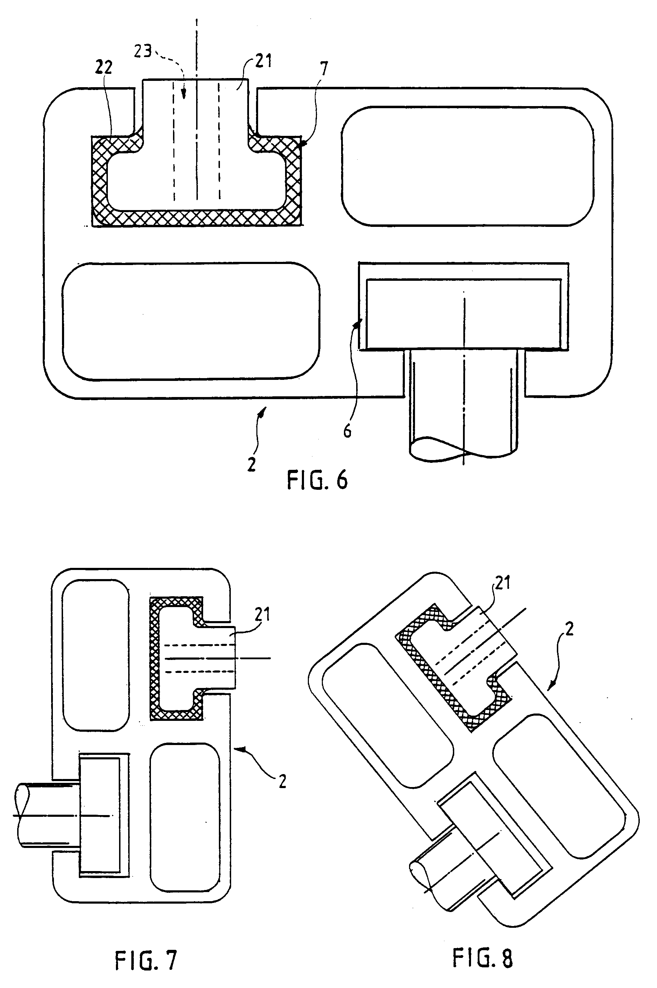

Fig. 6 zeigt eine weitere, leicht abgewandelte Ausführungsform eines Längslagers, bei dem ein T-förmiges Aufnahmeprofil kopfseitig vollkommen mit einem geringfügig elastisch nachgebenden, gleitfähigen Material (22), vorzugsweise Kunststoff, umgeben ist. Das Material (22) sollte hierbei so ausgewählt sein, daß sich eine geringe Haftreibung zwischen ihm und den umgebenden Begrenzungswänden der T-förmigen Verbundungsnut (7) ergibt. Das Aufnahmeprofil (21) ist mit einer Gewindebohrung (23) zum Einschrauben von Befestigungsschrauben für die Sitzplatte (3) versehen.

Fig. 7 zeigt das gleiche Tragprofil (2), jedoch hochkant stehend, mit einem entsprechend erhöhten Widerstandsmoment gegen Durchbiegung bei Belastung.

Fig. 8 zeigt das gleiche Tragprofil (2) in schräggestellter Anordnung.

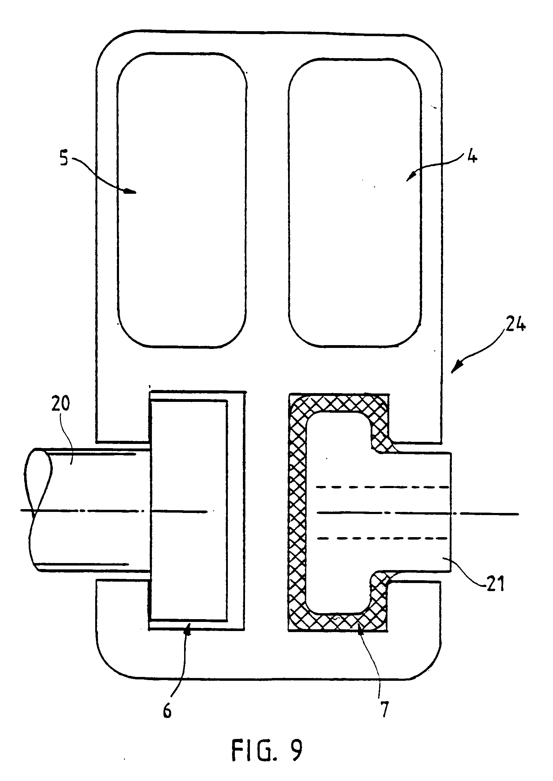

Schließlich ist noch ein Hohlkammerprofil (24) in Fig. 9 gezeigt, bei dem die beiden T-förmigen Nuten (6, 7) nebeneinander und die Hohlkammerprofile (4, 5) darüber angeordnet sind. Bei dieser Ausführung ergibt sich wiederum ein hohes Widerstandsmoment gegen Durchbiegung des Tragprofils (24), gleichzeitig aber auch, durch die tiefliegende Anordnung des Aufnahmeprofils (21) gegenüber dem Befestigungsbolzen (2), eine deutliche Verminderung der Umbruchkraft bei quer zu dem Tragprofil (24) einwirkenden Kräften.

Bei sämtlichen Darstellungsformen ist das Tragprofil (2) durch in die T-förmige Verbindungsnut (6) eingefügte Hammerschrauben (20) mit den Konsolen (8) der Auflagen (1, 8) verbunden.

## Patentansprüche

1. Doppel-Fahrgastsitz, gebildet aus zwei nebeneinander angeordneten Sitzen mit Rückenlehne, die auf einem Untergestell angeordnet sind, das gebildet ist aus beidseitigen Auflagen (1, 8), die von einem vorderen und einem hinteren, als Hohlkammer-Kastenprofil ausgebildeten Tragprofil, oder einer Tragprofilschiene mit einem vorderen und einem hinteren Tragprofil überspannt sind, wobei die Tragprofile jeweils mindestens eine oberseitige, im Querschnitt T-förmige Verbindungsnut (7) aufweisen und bei dem einer der Sitze über Längslager (9, 10, 12, 15) quer zur Sitzrichtung verschiebbar angebracht ist, wobei die Längslager (9, 10, 12, 15) jeweils in der T-förmigen Verbindungsnut (7) angeordnet sind,
dadurch gekennzeichnet,
daß der andere Sitz fest angebracht ist und daß in der T-förmigen Verbindungsnut (7) ein federnd nachgiebiges Teil (9, 15, 19) und eine Aufnahmeschiene (10), die mit der Sitzplatte (3) verbunden ist, vorgesehen sind, wobei bei unbelastetem Sitz die Oberseite der Aufnahmeschiene (10) gegen die obere Wandung der T-förmigen Verbindungsnut (7) gepreßt wird, während bei belastetem Sitz das federnd nachgiebige Teil (9, 15, 19) zusammengepreßt wird, so daß ein leichtes Verschieben des Sitzes möglich ist.

2. Doppel-Fahrgastsitz nach Anspruch 1,
dadurch gekennzeichnet,
daß sich zwischen dem federnd nachgiebigen Teil (9, 15, 19) und der Aufnahmeschiene (10) ein Wälzlager (12) befindet.

3. Doppel-Fahrgastsitz nach Anspruch 1 oder 2,
dadurch gekennzeichnet,
daß das federnd nachgiebige Teil (9, 15) als quergekrümmte Blattfeder ausgebildet ist.

4. Doppel-Fahrgastsitz nach Anspruch 1 oder 2,
dadurch gekennzeichnet,
daß zwischen dem federnd nachgiebigen Teil (9, 15, 19) und der Aufnahmeschiene (10) eine Lagerplatte (16) eingefügt ist.

5. Doppel-Fahrgastsitz nach Anspruch 4,
dadurch gekennzeichnet,
daß sich die Lagerplatte (16) zwischen dem federnd nachgiebigen Teil (9, 15, 19) und dem Wälzlager (12) befindet.

6. Doppel-Fahrgastsitz nach Anspruch 4 oder 5,
dadurch gekennzeichnet,
daß das federnd nachgiebige Teil eine Kunststoffunterlage (19) ist.

7. Doppel-Fahrgastsitz nach einem der
Ansprüche 1 bis 6,
dadurch gekennzeichnet, daß an der Unterseite der Aufnahmeschiene (16) Gleitscheiben (9) angebracht sind.

8. Doppel-Fahrgastsitz nach Anspruch 7,
dadurch gekennzeichnet,
daß die Gleitscheiben (9) aus Kunststoff sind.

9. Doppel-Fahrgastsitz nach Anspruch 8,
dadurch gekennzeichnet,
daß der Kunststoff mit Schmiermittel, insbesondere mit Molybdändisulfid gefüllt ist.

10. Doppel-Fahrgastsitz nach Anspruch 8 oder 9,
dadurch gekennzeichnet,
daß die Gleitscheiben (9) ballig federnd nachgiebig ausgebildet sind.

## Claims

1. A double passenger seat formed from two seats with backrest, which are arranged side-by-side and which are disposed on a support structure which is formed from supports (1, 8) at both sides which are spanned by a front and a rear carrier profile member in the form of a hollow-chamber box profile member or a carrier profile bar with a front and a rear carrier profile member, wherein the carrier profile members each have at least one connecting groove (7) at the top side, which is of T-shaped cross-section, and in which one of the seats is mounted displaceably transversely to the seat direction by way of longitudinal bearings (9, 10, 12, 15), the longitudinal bearings (9, 10, 12, 15) each being arranged in the respective T-shaped connecting groove (7), characterised in that the other seat is fixedly mounted and that provided in the T-shaped connecting groove (7) is a resiliently yielding portion (9, 15, 19) and a mounting bar (10) which is connected to the seat squab portion (3), wherein when the seat is without a load thereon the top side of the mounting bar (10) is pressed against the upper wall of the T-shaped connecting groove (7) while when the seat is loaded the resiliently yielding portion (9, 15, 19) is compressed so that the seat can be easily displaced.

2. A double passenger seat according to claim 1 characterised in that a rolling bearing (12) is disposed between the resiliently yielding portion (9, 15, 19) and the mounting bar (10).

3. A double passenger seat according to claim 1 or claim 2 characterised in that the resiliently yielding portion (9, 15) is in the form of a transversely curved leaf spring.

4. A double passenger seat according to claim 1 or claim 2 characterised in that a bearing plate (16) is inserted between the resiliently yielding portion (9, 15, 19) and the mounting bar (10).

5. A double passenger seat according to claim 4 characterised in that the bearing plate (16) is disposed between the resiliently yielding portion (9, 15, 19) and the rolling bearing (12).

6. A double passenger seat according to claim 4 or claim 5 characterised in that the resiliently yielding portion is a plastics support member (19).

7. A double passenger seat according to one of claim 1 to 6 characterised in that slide plates (9) are disposed at the underside of the mounting bar (10).

8. A double passenger seat according to claim 7 characterised in that the slide plates (9) are of plastics material.

9. A double passenger seat according to claim 8 characterised in that the plastics material is filled with lubricant, in particular molybdenum disulphide.

10. A double passenger seat according to claim 8 or claim 9 characterised in that the slide plates (9) are of a spherically resiliently yielding configuration.

## Revendications

1. Siège de passager double formé par deux sièges avec dossiers disposés côte à côte qui sont placés sur un bâti, lequel est formé par deux supports (1, 8) disposés de part et d'autre qui sont coiffés par un profilé porteur avant et arrière réalisé en tant que profilé en caisson ou par un rail en profilés porteurs comportant un profilé porteur avant et un profilé porteur arrière, sachant que les profilés porteurs présentent chacun au moins une rainure d'assemblage supérieure de section en forme de T (7), et sachant également que l'un des sièges est fixé par le biais de paliers de butée (9, 10, 12, 15) de manière à pouvoir être déplacé transversalement par rapport à la direction longitudinale du siège, les paliers de butée (9, 10, 12, 15) étant chaque fois disposés dans la rainure d'assemblage en forme de T (7), caractérisé en ce que l'autre siège est fixe et en ce que, dans la rainure d'assemblage en forme de T (7), sont prévus une pièce souple faisant ressort (9, 15, 19) et un rail de réception (10) qui sont reliés à la plaque d'assise (3), sachant que, lorsque le siège est inoccupé, la face supérieure du rail de réception (10) est appuyée contre la paroi supérieure de la rainure d'assemblage en forme de T (7), tandis que, lorsque le siège est occupé, la pièce souple faisant ressort (9, 15, 19) est comprimée de manière à permettre un déplacement aisé du siège.

2. Siège de passager double selon la revendication 1, caractérisé en ce qu'entre la pièce souple faisant ressort (9, 15, 19) et le rail de réception (10) se trouve un palier à roulement (12).

3. Siège de passager double selon la revendication 1 ou 2, caractérisé en ce que la pièce souple faisant ressort (9, 15) est réalisée sous la forme d'un ressort à lame présentant une courbure transversale.

4. Siège de passager double selon la revendication 1 ou 2, caractérisé en ce qu'entre la pièce souple faisant ressort (9, 15, 19) et le rail de réception (10) est insérée une plaque d'appui (16).

5. Siège de passager double selon la revendication 4, caractérisé en ce que la plaque d'appui (16) se trouve entre la pièce souple faisant ressort (9, 15, 19) et le palier à roulement (12).

6. Siège de passager double selon la revendication 4 ou 5, caractérisé en ce que la pièce souple faisant ressort est un support en matière plastique (19).

7. Siège de passager double selon l'une des revendications 1 à 6, caractérisé en ce que, sur la face inférieure du rail de réception (16), sont fixées des rondelles de glissement (9).

8. Siège de passager double selon la revendication 7, caractérisé en ce que les rondelles de glissement (9) sont en matière plastique.

9. Siège de passager double selon la revendication 8, caractérisé en ce que la matière plastique est remplie d'un lubrifiant, notamment de bisulfure de molybdène.

10. Siège de passager double selon la revendication 8 ou 9, caractérisé en ce que les rondelles de glissement (9) sont réalisées bombées et font ressort.
